# EUROPÄISCHE PATENTSCHRIFT

(11) **EP 2 182 600 B1**
(45) Veröffentlichungstag und Bekanntmachung des Hinweises auf die Patenterteilung: **19.08.2020**
(21) Anmeldenummer: 09012304.3
(22) Anmeldetag: 29.09.2009
(51) Int. Cl.: H02G 3/04

(54) **Leitungsführungskanal mit bündigem oder versetztem Deckelversatz**
Cable guidance channel with flush or offset cover stowage
Canal de guidage de conduite doté d'une possibilité de montage du couvercle affleurant ou en retrait

(30) Priorität: 30.10.2008 DE 202008014459 U
(43) Veröffentlichungstag der Anmeldung: 05.05.2010
(73) Patentinhaber: Tehalit GmbH, 67716 Heltersberg (DE)
(72) Erfinder: Vatter, Klaus, 66978 Clausen (DE)
(74) Vertreter: Nuss, Laurent

(56) Entgegenhaltungen:
- WO-A1-99/07048
- DE-U1- 9 103 262
- GB-A- 2 002 971
- GB-A- 2 026 254
- GB-A- 2 278 739

## Beschreibung

Die vorliegende Erfindung betrifft einen Leitungsführungskanal, bei dem zur Erfüllung von Kundenanforderungen das Oberteil in zwei unterschiedlichen Montagepositionen auf das Unterteil des Kanals aufsetzbar ist.

Leitungsführungskanäle bestehen aus einem U-förmigen Unterteil und einem darauf aufsetzbaren Oberteil oder Deckel. Zur Verrastung des Oberteils auf das Unterteil sind an den Seitenwänden am Unterteil Deckelhalteprofile ausgebildet. Diese kooperieren mit den ebenfalls an den Seitenwänden am Oberteil ausgeformten Formprofilen. Je nach Kanaltyp können die Deckelhalteprofile sowie die entsprechenden Gegenstücke der Formprofile des Oberteils unterschiedliche geometrische Ausgestaltungen haben. Solche Strukturen können zum Teil sehr komplex sein. Oftmals ist erhebliche Entwicklungsarbeit notwendig, um zu einer optimalen und funktionsgerechten Struktur von Deckelhalteprofilen zu gelangen, die zudem einfach und kostengünstig in der Herstellung ist. Unter- und Oberteil sollen bei der Montage einfach zu handhaben und für den Monteur leicht montierbar sein.

Die Kundenwünsche können hinsichtlich des optischen Eindrucks beim Betrachten von Leitungsführungskanälen bzw. Kabelkanälen in Räumen sehr unterschiedlich sein. Viele Abnehmer von Leitungsführungskanälen fordern einen bündigen Abschluss der Oberseite des Oberteils mit dem oberen Kanalrand des Unterteils. Andererseits ist es oft erwünscht, dass die Oberseite des Oberteils und der obere Kanalrand des Unterteils nicht bündig, sondern versetzt abgeschlossen werden. Bislang wurden für diese beiden Kundenwünsche zwei verschiedene Montagevarianten von Leitungsführungskanälen angeboten, um eine bündige oder versetzte Montageposition für einen Leitungsführungskanal zu ermöglichen. Mehrere Varianten erhöhen den Herstellungs- und Vertriebsaufwand sowie die Anzahl von Teilen bei der Montage. Dies ist unbefriedigend.

DE 91 03 262 U1 zeigt einen Leitungsführungskanal (s. Fig. 2 - 5) mit jeweils asymmetrischen Haltestrukturen an den Wänden von Oberteil und Unterteil, die dazu dienen, Oberteil und Unterteil in verschiedenen Bauhöhen zusammenzuhalten.

GB 2 026 254 A zeigt einen Kabelkanal, bei dem der Deckel mit verschiedenen hohen Stegen die Gesamthöhe definieren.

GB 2 278 739 A zeigt einen Kabelkanal, der über Rastungen in den Seitenwänden höhenverstellbar ist.

Die vorliegende Erfindung sucht hierzu eine besondere Alternative.

Der vorliegenden Erfindung liegt die Aufgabe zugrunde, einen Leitungsführungskanal anzugeben, bei dem mit einem einzigen Oberteil eine bündige und eine versetzte Montageposition gegenüber dem Unterteil möglich ist.

Diese Aufgabe wird gelöst durch einen Leitungsführungskanal mit den Merkmalen des Anspruchs 1.

Die Erfindung basiert auf einer neuartigen Ausgestaltung durch einen asymmetrischen Aufbau der beiden seitlichen Deckelhalteprofile des Unterteils bzw. der beiden seitlichen Formprofile des Oberteils. Unter einem asymmetrischen Aufbau werden Deckelhalteprofile und Formprofile verstanden, deren geometrische Strukturen auf beiden Seiten des Unterteils bzw. Oberteils unterschiedlich ausgeformt sind oder unterschiedliche geometrische Maße besitzen. Die an den Seitenwänden des Kanals ausgebildeten Formprofile des Oberteils kooperieren für den Verschluss mit den seitlichen Deckelhalteprofilen des Unterteils.

Durch die erfindungsgemäß ausgestalteten Deckelhalteprofile des Unterteils und der Formprofile des Oberteils sowie deren asymmetrischem Aufbau ist es möglich, dass für denselben Leitungsführungskanal mit einem einzigen Oberteil zwei verschiedene Montagepositionen möglich werden. Je nach Orientierung des Oberteils wird eine bündige oder eine versetzte Montageposition möglich.

Ein wesentlicher Vorteil der Erfindung besteht darin, dass ein bereits vorhandener Leitungsführungskanal mit einfachen Handgriffen von einer bündigen Montageposition in eine versetzte Montageposition modifiziert werden kann. Hierzu muss der Deckel lediglich vom Monteur um einen Winkel von 180° gedreht und auf das Unterteil aufgerastet werden. Durch die erfindungsgemäße Ausgestaltung der Deckelhalteprofile bzw. der Formprofile werden zwei Montagestellungen möglich. Erreicht werden diese erfindungsgemäß durch zwei an den beiden Seiten der Formprofile unterschiedlich lang ausgebildete Schenkelelemente. Diese kooperieren mit den geometrischen Strukturen der Deckelhalteprofile derart, dass je nach Orientierung des Deckels entweder ein Versatz oder ein bündiger Abschluss mit dem oberen Kanalrand des Unterteils entsteht. Damit wird die Herstellung und Montage erheblich erleichtert; Kosten werden reduziert.

Die Erfindung wird in den nachfolgenden Zeichnungen näher erläutert. Es zeigen
- Fig. 1: eine erste Ausführungsform der vorliegenden Erfindung mit einer bündigen und versetzten Montageposition,
- Fig. 2: eine weitere Ausführungsform der vorliegenden Erfindung mit einer bündigen und versetzten Montageposition.

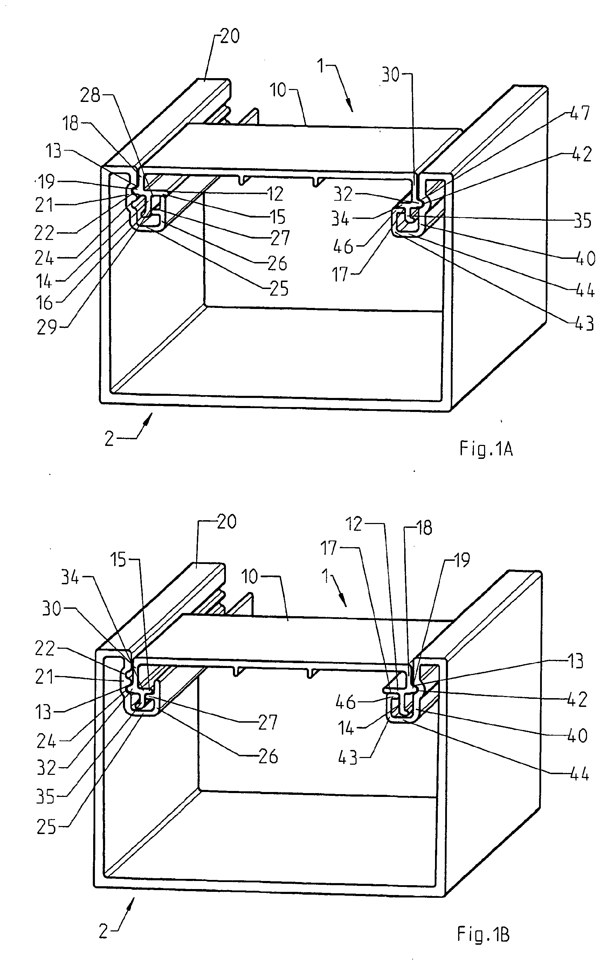

In Fig. 1 ist eine erste Ausführungsform des erfindungsgemäßen Leitungsführungskanals gezeigt. In Fig. 1A erkennt man das Unterteil 2 sowie das auf diesem aufgesetzte Oberteil 1. Man erkennt, dass die Oberseite 10 des Oberteils 1 mit der Kanaloberkante 20 des Unterteils 2 bündig abschließt.

Am Oberteil 1 sind beidseitig zwei unterschiedlich ausgeformte Formprofile gezeigt. Zu erkennen ist deutlich, dass das oberste Seitenelement 18 des linken Formprofils kürzer ist als das oberste Seitenelement 30 des rechten Formprofils. Die unterschiedlichen Schenkellängen machen es möglich, dass je nach Orientierung des Oberteils 1 entweder eine bündige oder eine versetzte Montageposition ermöglicht wird.

Das Formprofil besteht ferner aus Stützleisten 12, 34, welche waagrecht verlaufen. Bei dem linken ersten Formprofil liegt die Stützleiste 12 auf dem Schenkelende des Innenschenkels 26 des ersten linken Deckelhalteprofils auf. Ferner ist ein nach unten verlaufendes Fußelement 14 an der Stützleiste 12 ausgebildet. Im aufgerasteten Zustand des Oberteils 1 bildet die Stützleiste 12 eine erste stützende Kontaktfläche 15 mit dem Schenkelende des Innenschenkels 26. Das Fußelement 16 bildet mit der Außenkante einer am Innenschenkel 26 ausgeformten Leiste 27 eine weitere Kontaktfläche 29. Durch die erfindungsgemäße Struktur wird in der bündigen Montageposition durch das Stützelement 12, den Innenschenkel 26 und die daran ausgeformte Leiste 27 sowie das Fußelement 16 des Formprofils eine geschlossene Kammer 28 gebildet.

Zur zusätzlichen Verrastung sind in der gezeigten Ausführungsform am Außenschenkel 21 des linken ersten Deckelhalteprofils zwei parallel verlaufende Nuten 22, 24 ausgebildet. In diese Nuten 22, 24 greift eine am Rand des Formprofils ausgebildete Nase 19 und bildet eine weitere stützende Kontaktfläche 13 mit den entsprechenden Nuten 22, 24. In der bündigen Montageposition verläuft die Nase 19 des linken ersten Formprofils in der obersten Nut 22.

Das rechte zweite Deckelhalteprofil (Fig. 1A, rechts) besitzt einen anderen geometrischen Aufbau. Am Schenkelende des Innenschenkels 43 des rechten zweiten Deckelhalteprofils ist ein Steg 46 ausgeformt, der vorzugsweise waagrecht zur Deckeloberfläche 10 verläuft. An dem Außenschenkel 40 verläuft eine Nut 42. Das rechte zweite Formprofil des Oberteils 1 besteht aus einem obersten Schenkelelement 30, das gegenüber dem Seitenelement 18 des linken ersten Formprofils verlängert ist, sowie einer daran ausgebildeten Stützleiste 34. Die Stützleiste 34 liegt in der aufgerasteten Position des Oberteils 1 auf dem Steg 46 auf. An der Unterseite der Stützleiste 34 befindet sich ein vorzugsweise in J-Form ausgestaltetes Fußelement 35. Stützleiste 34 und Fußelement 35 kooperieren mit dem Steg 46 und bilden eine stützende Kontaktfläche 17. An der Unterseite des obersten Seitenelements 30 ist eine vorzugsweise über die gesamte Breitseite des Oberteils 1 verlaufende Nase 32 ausgebildet. Diese greift in die Nut 42 und bildet eine weitere stützende Kontaktfläche 47.

Durch das Zusammenspiel der asymmetrisch aufgebauten Deckelhalteprofile des Unterteils 2 und der Formprofile des Oberteils 1 wird die bündige Montageposition erreicht.

Für die versetzte Montageposition wird das Oberteil 1 um einen Winkel von 180° gedreht (siehe Figur 1B). Nun kooperiert das vormals rechte zweite Formelement des Oberteils 1 mit dem ersten linken Deckelhalteprofil des Unterteils 2. Die Interaktion der geometrischen Strukturen sieht folgendermaßen aus: zunächst soll die Situation auf der linken Seite der Fig. 1B beschrieben werden. Die Stützleiste 34 liegt auf der an dem Innenschenkel 26 ausgeformten Leiste 27 auf und bildet eine Kontaktfläche 15. Das an der Unterseite der Stützleiste 34 ausgeformte Fußelement 35 stützt sich von der Vorderseite gegen die Leiste 27 ab. Die an der Fußseite des obersten Schenkelelementes ausgeformte Nase 32 greift nun in die untere Nut 24 und bildet eine weitere Kontaktfläche 13.

Die Situation auf der rechten Seite der Fig. 1B sieht wie folgt aus: die an der Unterseite des Seitenelementes 18 ausgebildete Nase 19 greift in die am Außenschenkel 40 ausgebildete Nut 42 und bildet eine Kontaktfläche 13. Die Stützleiste 12 liegt auf dem am Schenkelende des Innenschenkels 43 ausgebildeten Steg 46 auf. Das Fußelement 14 stützt sich ebenfalls gegen den Steg 46 ab. Dadurch wird die versetzte Montageposition erreicht.

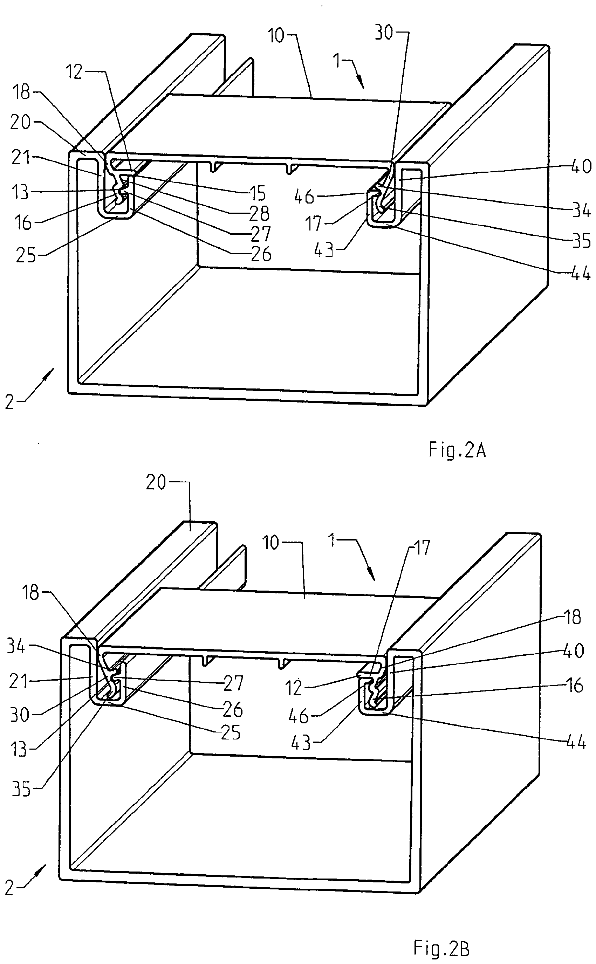

In Fig. 2 ist eine weitere Ausführungsform des erfindungsgemäßen Leitungsführungskanals gezeigt. Hierbei ist in der bündigen Montageposition das Fußelement 16 zackenförmig ausgebildet und stützt sich gegen die Leiste 27 des Innenschenkels 26 ab (Situation Fig. 2A, links). Das Stützelement 12 liegt auf dem Schenkelende des Innenschenkels 26 auf. Auch in dieser Variante wird eine geschlossene Kammer 28 durch die Anordnung von Stützelement 12, Fußelement 16, Leiste 27 und Innenschenkel 26 gebildet. Am Außenschenkel 21 befindet sich im Gegensatz zu der ersten gezeigten Ausführungsform keine Nut. Das oberste Seitenelement 18 des linken ersten Formprofils ist kleiner als das oberste Seitenelement 30 des rechten zweiten Formprofils.

In der rechten Situation der Fig. 2A ist an der Unterseite des obersten Seitenelements 30 das Stützelement 34 erkennbar, das nach oben abgewinkelt ist. Dieses liegt auf dem Steg 46 des Innenschenkels 43 auf und bildet eine stützende Kontaktfläche 17. An den Kontaktflächen stützen sich die einzelnen Strukturelemente gegenseitig ab.

In Fig. 2B ist die versetzte Montageposition für die zweite Ausführungsform gezeigt. Das Oberteil 1 wurde hierzu um einen Winkel von 180° gedreht. Nun kooperiert das Stützelement 34 mit der Leiste 27 und bildet eine Kontaktfläche 13 (siehe Fig. 2B, rechts). Auf der linken Seite liegt das Stützelement 12 auf dem Steg 46 auf und bildet eine weitere Kontaktfläche 17.

Mit der erfindungsgemäßen Ausgestaltung der asymmetrisch aufgebauten Deckelhalteprofile des Unterteils 2 und der Formprofile des Oberteils 1 werden zwei unterschiedliche Oberteilpositionen ermöglicht, ohne dass verschiedene Montageteile oder gar Leitungsführungskanäle notwendig wären. Beide Montagepositionen sind schnell und leicht montierbar und bei Bedarf miteinander austauschbar.

## Patentansprüche

1. Leitungsführungskanal, bestehend aus einem U-förmigen Oberteil (1) als Deckel und einem U-förmigen Unterteil (2), mit den Merkmalen:
- an dem Oberteil (1) sind an den Seitenwänden beidseitig zwei geometrisch unterschiedlich ausgeformte Formprofile ausgebildet, jeweils mit Stützleiste (12, 34) und oberstem Seitenelement (18, 30),
- an dem Unterteil (2) sind an den Seitenwänden beidseitig zwei geometrisch unterschiedlich ausgeformte U-förmige Deckelhalteprofile bestehend aus einem Innenschenkel (26, 43), einem Boden (25, 44) und einem Außenschenkel (21, 40) sowie Leisten (27) und Stegen (46),
- die beiden Deckelhalteprofile des Unterteils (2) und die beiden Formprofile des Oberteils (1) sind asymmetrisch ausgeformt und kooperieren miteinander, wobei die geometrischen Strukturen der Deckelhalte- bzw. Formprofile auf beiden Seiten des Unterteils (2) bzw. des Oberteils (1) unterschiedlich ausgeformt sind,
wobei:
- die bis zu den mit den Deckelhalteprofilen kooperierenden Stützleisten (12, 34) verlaufenden obersten Seitenelemente (18, 30) der beiden Formprofile unterschiedlich lang sind, wodurch je nach Orientierung des Oberteils (1) um einen Winkel von 180° entweder eine bündige oder eine versetzte Montageposition des Oberteils (1) auf dem Unterteil (2) ermöglicht wird.

2. Leitungsführungskanal nach Anspruch 1, **gekennzeichnet durch** die Merkmale:
- das erste Deckelhalteprofil des Unterteils (2) umfasst eine in etwa in der Schenkelmitte des Innenschenkels (26) zum Außenschenkel (21) ausgeformte Leiste (27),
- das zweite Deckelhalteprofil des Unterteils (2) umfasst einen am Schenkelende des Innenschenkels (43) ausgeformten Steg (46),
- an dem ersten und dem zweiten Formprofil ist jeweils eine zur Kanalmitte weisende Stützleiste (12, 34) und ein Fußelement (16, 35) ausgebildet.

3. Leitungsführungskanal nach Anspruch 2, **gekennzeichnet durch** die Merkmale:
- in der bündigen Montageposition
- liegt beim ersten Deckelhalteprofil die erste Stützleiste (12) des Formprofils auf dem Schenkelende des Innenschenkels (26) und bildet eine erste Kontaktfläche (15), das Fußelement (16) stützt sich gegen die Leiste (27) ab und bildet eine weitere Kontaktfläche (29),
- beim zweiten Deckelhalteprofil stützt sich die zweite Stützleiste (34) des Formprofils gegen den Steg (46) ab und bildet eine weitere Kontaktfläche (17);
- in der versetzten Montageposition
- liegt beim ersten Deckelhalteprofil die zweite Stützleiste (34) auf der Leiste (27) auf und bildet eine erste Kontaktfläche (15),
- beim zweiten Deckelhalteprofil liegt die erste Stützleiste (12) auf dem Schenkelende (46) des Innenschenkels (43) und bildet eine weitere Kontaktfläche (17).

4. Leitungsführungskanal nach einem der Ansprüche 2 oder 3, **gekennzeichnet durch** die Merkmale:
- an dem Außenschenkel (21) des ersten Deckelhalteprofils sind zwei Nuten (22, 24) ausgeformt,
- in dem Außenschenkel (40) des zweiten Deckelhalteprofils ist eine weitere Nute (42) ausgeformt,
- an der Unterseite der Seitenelemente (18, 30) der beiden Formprofile des Oberteils (1) ist eine Nase (32, 19) ausgebildet, welche in eine der Nuten (22, 24, 42) der beiden Deckelhalteprofile eingerastet wird.

5. Leitungsführungskanal nach einem der Ansprüche 2 bis 4, **gekennzeichnet durch** die Merkmale:
- die Stützleiste (34) des ersten Formprofils des Oberteils (1) und die zum Außenschenkel (21) ausgeformte Leiste (27) sind abgewinkelt,
- das Fußelement (16) des zweiten Formprofils des Oberteils (1) ist zackenförmig ausgebildet.

6. Leitungsführungskanal nach einem der Ansprüche 2 bis 5, **gekennzeichnet durch** die Merkmale:
- in der bündigen Montageposition bilden die Stützleiste (12) und das Fußelement (16) des ersten Formprofils sowie der Innenschenkel (26) und die darin ausgeformte Leiste (27) eine geschlossene Kammer (28),
- in der versetzten Montageposition grenzen die Stützleiste (34) des zweiten Formprofils und die Leiste (27) des ersten Deckelhalteprofils einerseits, sowie die Stützleiste (12) des ersten Formprofils und der Steg (46) des zweiten Deckelhalteprofils andererseits direkt aufeinander und bilden mehrere stützende Kontaktflächen (13, 15, 17).

## Claims

1. Cable guiding channel, consisting of a U-shaped upper part (1) as a cover and a U-shaped lower part (2) having the features:
- on the upper part (1) two geometrically differently shaped form profiles are formed on the side walls on both sides, each form profile with a support strip (12, 34) and upper side element (18, 30),
- on the lower part (2) two geometrically differently formed U-shaped cover holding profiles are formed on the side walls on both sides, the cover holding profiles consisting of an inner leg (26, 43), a base (25, 44) and an outer leg (21, 40) as well as strips (27) and cross pieces (46),
- the two cover holding profiles of the lower part (2) and the two form profiles of the upper part (1) are designed to be asymmetrical and cooperate with one another, wherein the geometric structures of the cover holding profiles or form profiles are shaped differently on both sides of the lower part (2) or the upper part (1),
wherein:
- the upper side elements (18, 30) of the two form profiles which run up to the supports strips (12, 34) cooperating with the cover holding profiles are of different lengths, whereby depending on the orientation of the upper part (1) about an angle of 180° either a flush or an offset mounting position of the upper part (1) on the lower part (2) is possible.

2. Cable guiding channel according to claim 1, **characterised by** the features:
- the first cover holding profile of the lower part (2) comprises a strip (27) formed approximately in the centre of the inner leg (26) to the outer leg (21),
- the second cover holding profile of the lower part (2) comprises a cross piece (46) formed on the end of the inner leg (43),
- on the first and the second form profile respectively a support strip (12, 34) pointing to the channel centre and a foot element (16, 35) are formed.

3. Cable guiding channel according to claim 2, **characterised by** the features:
- in the flush mounting position:
- in the first cover holding profile the first support strip (12) of the form profile lies on the end of the inner leg (26) and forms a first contact face (15), the foot element (16) is supported against the strip (27) and forms a further contact face (29),
- in the second cover holding profile the second support strip (34) of the form profile is supported against the cross piece (46) and forms a further contact face (17);
- in the offset mounting position:
- in the first cover holding profile the second support strip (34) lies on the strip (27) and forms a first contact face (15),
- in the second cover holding profile the first support strip (12) lies on the end (46) of the inner leg (43) and forms a further contact face (17).

4. Cable guiding channel according to any of claims 2 or 3, **characterised by** the features:
- two grooves (22, 24) are formed on the outer leg (21) of the first cover holding profile,
- an additional groove (42) is formed in the outer leg (40) of the second cover holding profile,
- on the lower side of the side elements (18, 30) of the two form profiles of the upper part (1) a nose (32, 19) is formed which is engaged in one of the grooves (22, 24, 42) of the two cover holding profiles.

5. Cable guiding channel according to any of claims 2 to 4, **characterised by** the features:
- the support strip (34) of the first form profile of the upper part (1) and the strip (27) formed to the outer leg (21) are angled,
- the foot element (16) of the second form profile of the upper part (1) is designed to be zigzag-shaped.

6. Cable guiding channel according to any of claims 2 to 5, **characterised by** the features:
- in the flush mounting position the support strip (12) and the foot element (16) of the first form profile and the inner leg (26) and the strip (27) formed therein of the first cover holding profile form a closed chamber (28),
- in the offset mounting position the support strip (34) of the second form profile and the strip (27) of the first cover holding profile on the one hand, and the support strip (12) of the first form profile and the cross piece (46) of the second cover holding profile on the other hand adjoin one another directly and form a plurality of supporting contact faces (13, 15, 17).

## Revendications

1. Conduit de câbles, composé d'une partie supérieure en forme de U (1) servant de couvercle et d'une partie inférieure en forme de U (2), présentant les caractéristiques suivantes :
- sur la partie supérieure (1), deux profilés moulés de forme géométrique différente sont formés de part et d'autre sur les parois latérales, chacun avec une moulure de support (12, 34) et un élément latéral supérieur (18, 30),
- sur la partie inférieure (2), deux profilés de retenue de couvercle en forme de U de forme géométrique différente, composés d'une aile intérieure (26, 43), d'un fond (25, 44) et d'une aile extérieure (21, 40) ainsi que de moulures (27) et de branches (46), sont formés de part et d'autre sur les parois latérales,
- les deux profilés de retenue de couvercle de la partie inférieure (2) et les deux profilés moulés de la partie supérieure (1) sont de forme asymétrique et coopèrent entre eux, les structures géométriques des profilés de retenue de couvercle, respectivement des profilés moulés, étant de forme différente des deux côtés de la partie inférieure (2), respectivement de la partie supérieure (1),
dans lequel :
- les éléments latéraux supérieurs (18, 30) des deux profilés moulés s'étendant jusqu'aux moulures de support (12, 34) qui coopèrent avec les profilés de retenue de couvercle sont de longueur différente, permettant ainsi une position de montage affleurante ou décalée de la partie supérieure (1) sur la partie inférieure (2) en fonction de l'orientation de la partie supérieure (1) d'un angle de 180°.

2. Conduit de câbles selon la revendication 1, **caractérisé en ce que** :
- le premier profilé de retenue de couvercle de la partie inférieure (2) comprend une moulure (27) formée à peu près au centre d'aile de l'aile intérieure (26) vers l'aile extérieure (21),
- le deuxième profilé de retenue de couvercle de la partie inférieure (2) comprend une branche (46) formée à l'extrémité d'aile de l'aile intérieure (43),
- une moulure de support (12, 34) orientée vers le centre du conduit et un élément de pied (16, 35) sont formés chaque fois sur le premier et le deuxième profilé moulé.

3. Conduit de câbles selon la revendication 2, **caractérisé en ce que** :
- dans la position de montage affleurante :
- sur le premier profilé de retenue de couvercle, la première moulure de support (12) du profilé moulé repose sur l'extrémité d'aile de l'aile intérieure (26) et forme une première surface de contact (15), l'élément de pied (16) s'appuie contre la moulure (27) et forme une autre surface de contact (29),
- sur le deuxième profilé de retenue de couvercle, la deuxième moulure de support (34) du profilé moulé s'appuie contre la branche (46) et forme une autre surface de contact (17) ;
- dans la position de montage décalée :
- sur le premier profilé de retenue de couvercle, la deuxième moulure de support (34) repose sur la moulure (27) et forme une première surface de contact (15),
- sur le deuxième profilé de retenue de couvercle, la première moulure de support (12) repose sur l'extrémité d'aile (46) de l'aile intérieure (43) et forme une autre surface de contact (17).

4. Conduit de câbles selon l'une des revendications 2 ou 3, **caractérisé en ce que** :
- deux rainures (22, 24) sont formées sur l'aile extérieure (21) du premier profilé de retenue de couvercle,
- une autre rainure (42) est formée dans l'aile extérieure (40) du deuxième profilé de retenue de couvercle,
- un ergot (32, 19) est formé sur la face inférieure des éléments latéraux (18, 30) des deux profilés moulés de la partie supérieure (1), lequel est encliqueté dans l'une des rainures (22, 24, 42) des deux profilés de retenue de couvercle.

5. Conduit de câbles selon l'une des revendications 2 à 4, **caractérisé en ce que** :
- la moulure de support (34) du premier profilé moulé de la partie supérieure (1) et la moulure (27) formée vers l'aile extérieure (21) sont coudées,
- l'élément de pied (16) du deuxième profilé moulé de la partie supérieure (1) est dentelé.

6. Conduit de câbles selon l'une des revendications 2 à 5, **caractérisé en ce que** :
- dans la position de montage affleurante, la moulure de support (12) et l'élément de pied (16) du premier profilé moulé ainsi que l'aile intérieure (26) et la moulure (27) du premier profilé de retenue de couvercle qui y est formée forment une chambre fermée (28),
- dans la position de montage décalée, la moulure de support (34) du deuxième profilé moulé et la moulure (27) du premier profilé de retenue de couvercle, d'une part, et la moulure de support (12) du premier profilé moulé et la branche (46) du deuxième profilé de retenue de couvercle, d'autre part, sont directement adjacentes l'une à l'autre et forment plusieurs surfaces de contact (13, 15, 17) pour le support.
